# EUROPÄISCHE PATENTANMELDUNG

(11) **EP 3 771 590 A1**
(43) Veröffentlichungstag der Anmeldung: **03.02.2021**
(21) Anmeldenummer: 20188383.2
(22) Anmeldetag: 29.07.2020
(51) Int. Cl.: B60L 7/10, B60L 53/12, B60L 53/14, B60L 53/22, B60L 53/30

(54) **ANHÄNGER, NUTZFAHRZEUG UND VERFAHREN ZUM INDUKTIVEN KOPPELN EINER PRIMÄREINRICHTUNG UND EINER SEKUNDÄREINRICHTUNG**

(30) Priorität: 02.08.2019 DE 102019120923
(71) Anmelder: SAF-HOLLAND GmbH, 63856 Bessenbach (DE)
(72) Erfinder: Hartmann, Mark, 63869 Heigenbrücken (DE)
(74) Vertreter: Müller Schupfner & Partner Patent- und Rechtsanwaltspartnerschaft mbB

(57) **Zusammenfassung**

Anhänger(1), insbesondere Sattelanhänger, mit einem elektrischen Energiespeicher (19) und/oder einem elektrischen Verbraucher, wobei der Anhänger (1) eine Sekundäreinrichtung (12) zum induktiven Koppeln mit einer anhängerexternen Primäreinrichtung (11) für ein induktives Übertragen von Energie von der Primäreinrichtung (11) zu der Sekundäreinrichtung (12) umfasst, wobei die Sekundäreinrichtung (12) an einer von einem Unterboden (3) des Anhängers (1) abstehenden Fahrzeugkomponente angeordnet ist.

## Beschreibung

Die vorliegende Erfindung betrifft einen Anhänger, ein Nutzfahrzeug und ein Verfahren zum induktiven Koppeln einer Primäreinrichtung und einer Sekundäreinrichtung.

Aus dem Stand der Technik sind Anhänger bzw. Nutzfahrzeuge hinlänglich bekannt, die Energiespeicher und/oder elektrische Verbraucher aufweisen. Beispielsweise handelt es sich bei dem elektrischen Verbraucher um eine Lichtanlage und/oder eine Elektromaschine, die beispielsweise auch rekuperativ aufgeladen werden kann. Um bei Bedarf den Energiespeicher bzw. den elektrischen Verbraucher aufzuladen bzw. mit Energie zu versorgen, ist es aus dem Stand der Technik ferner bekannt, ein induktives Koppeln zwischen einer fahrzeugexternen Primärquelle und einer fahrzeuginternen Sekundärquelle vorzunehmen.

Beispielsweise ist aus der DE 10 2011 108 544 A1 ein System zum induktiven Koppeln einer Primäreinrichtung und einer Sekundäreinrichtung vorgesehen, wobei die Sekundäreinrichtung an einer Unterseite eines PKWs angeordnet ist.

Im Gegensatz zu der Anordnung der Sekundäreinrichtung an der Unterseite eines PKWs sind bei Anhängern bzw. Nutzfahrzeugen die Abstände zwischen dem Unterboden des Fahrwerks und der Fahrbahn bzw. dem Boden, in dem typischerweise die Primäreinrichtung eingelassen ist, signifikant größer. Entsprechend ist die Effizienz für die Übertragung von Energie von der Primäreinrichtung zu der Sekundäreinrichtung, beispielsweise in Form einer induktiven Übertragung, im Vergleich zu PKWs eingeschränkter bzw. die Übertragung von Energie ist aufwendiger.

Ausgehend hiervon machte es sich die vorliegende Erfindung zur Aufgabe das Aufladen, insbesondere das induktive oder mechanische Koppeln einer fahrzeugexternen Primärquelle an die fahrzeuginterne Sekundärquelle zu verbessern, insbesondere hinsichtlich einer Effizienz der Übertragung und der Handhabung während des Ladevorgangs.

Die Aufgabe wird gelöst mit einem Anhänger gemäß Anspruch 1, einem Nutzfahrzeug gemäß Anspruch 13 und einem Verfahren gemäß Anspruch 14. Weitere Vorteile und Eigenschaften der Erfindung ergeben sich aus den Unteransprüchen sowie der Beschreibung und den beigefügten Figuren.

Gemäß einem ersten Aspekt der vorliegenden Erfindung ist ein Anhänger oder Nutzfahrzeuganhänger vorgesehen, insbesondere ein Sattelanhänger, mit einem Energiespeicher und/oder einem Verbraucher, insbesondere einem elektrischen Energiespeicher und/oder einem elektrischen Verbraucher, wobei der Anhänger eine Sekundäreinrichtung zum induktiven oder mechanischen Koppeln mit einer anhängerexternen Primäreinrichtung für ein Übertragen von Energie, vorzugsweise für ein induktives Übertragen, von der Primäreinrichtung zu der Sekundäreinrichtung umfasst, wobei die Sekundäreinrichtung an einer von einem Unterboden des Anhängers abstehenden und/oder beabstandeten Fahrzeugkomponente angeordnet ist.

Im Gegensatz zum Stand der Technik wird somit erfindungsgemäß die Sekundäreinrichtung nicht unmittelbar an den Unterboden bzw. das Chassis angebunden, sondern stattdessen an einer vom Unterboden des Anhängers abstehenden und/oder beabstandeten Fahrzeugkomponente. Ein Haltebock, auch Stütze genannt, ist beispielsweise in dieser Betrachtung nicht als Bestandteil des Chassis sondern als Komponente des Fahrwerks zu sehen. Dadurch wird in vorteilhafter Weise der Abstand zwischen dem Boden, in dem die Primäreinrichtung eingelassen ist, und der Sekundäreinrichtung verkleinert. Insbesondere steht die Fahrzeugkomponente in Richtung des Bodens bzw. der Fahrbahn von dem Unterboden des Anhängers ab. Dabei ist die Fahrzeugkomponente kein Teil des Chassis bzw. der Außenhülle des Anhängers. Vorzugsweise handelt es sich bei der Fahrzeugkomponente um ein Bauteil, das primär einer anderen Funktionalität dient. Die vom Unterboden abstehende Fahrzeugkomponente besitzt zweckmäßigerweise zumindest eine Doppelfunktionalität, wobei eine der Funktionalitäten die Anbindung der Sekundäreinrichtung ist. Dabei kann die Fahrzeugkomponente schräg oder senkrecht vom Unterboden des Anhängers abstehen. Durch die Nutzung einer Fahrzeugkomponente, die bereits wegen ihrer primären Funktionalität am Unterboden des Anhängers erforderlich ist, ist es in vorteilhafter Weise möglich, auf Zusatzkomponenten bzw. - bauteile zu verzichten, mit denen andernfalls der Abstand zwischen dem Unterboden des Anhängers und der Fahrbahn überbrückt werden müsste. Vorzugsweise ist die Sekundäreinrichtung derart an der Fahrzeugkomponente angebunden, dass sie mindestens in einer Ladestellung zeitweise parallel zur Primäreinrichtung ausgerichtet ist. Dabei wird zum Aufladen der Anhänger beispielsweise oberhalb der in den Boden eingelassenen Primäreinrichtung angeordnet. Bei dem elektrischen Energiespeicher und/oder dem elektrischen Verbraucher kann es sich beispielsweise um eine Lichtanlage oder einen Elektromotor o. ä. handeln. Entsprechend ist die Sekundäreinrichtung über eine elektrische Leitung mit dem elektrischen Energiespeicher und/oder dem elektrischen Verbraucher verbunden, um für die entsprechende Versorgung zu sorgen. Vorzugsweise handelt es sich bei dem Anhänger um einen Sattelanhänger, insbesondere einen Sattelanhänger, der in einem vorderen Bereich eine Ankopplungsvorrichtung zur Ankopplung an eine Sattelkupplung an einer Zugmaschine aufweist. Ein Nutzfahrzeuganhänger bzw. Nutzfahrzeug im Sinne der Erfindung ist insbesondere ein Anhänger, welcher eine zulässige Gesamtmasse von mindestens 7,51 t, bevorzugt von mindestens 10,1 t und besonders stark bevorzugt von mindestens 15,1 t aufweist.

Vorzugsweise handelt es sich bei der Primäreinrichtung und/oder der Sekundäreinrichtung um einen Stecker, einen Schleifkontakt und/oder eine Spule. Insbesondere ist unter Primäreinrichtung und Sekundäreinrichtung jegliche Form von Systematik zu verstehen, die eine Übertragung von Energie, insbesondere elektrischer Energie, gestattet. Dabei kann die Energieübertragung beispielsweise kontaktlos erfolgen oder über einen mechanischen Kontakt zwischen der Primäreinrichtung und der Sekundäreinrichtung. Besonders bevorzugt ist die Ausgestaltung der Primäreinrichtung als Primärspule und der Sekundäreinrichtung als Sekundärspule. Insbesondere erlaubt es die Ausgestaltung der Primäreinrichtung als Primärspule und der Sekundäreinrichtung als Sekundärspule von dem reduzierten Abstand zwischen der Primärspule und der Sekundärspule beim Übertragen der Energie zu profitieren, da die Effizienz des Energieübertrags bei induktiven Koppeln mit abnehmenden Abstand zwischen Primärspule und Sekundärspule signifikant zunimmt.

Gemäß einer bevorzugten Ausführungsform ist es vorgesehen, dass die Fahrzeugkomponente eine Fahrwerkskomponente ist, insbesondere eine Achse, ein Achsrohr oder ein Achstummel, und/oder ein Führungslenker und/oder ein Haltebock und/oder ein Querträger. Eine Fahrwerkskomponente ist vorteilhafterweise ein Bauteil, welches dazu dient, das Fahrzeug an dem es montiert ist, abzustützen. Unter einem Abstützen ist dabei insbesondere zu verstehen, dass bei einem nicht Vorhandensein der Fahrwerkskomponente das Fahrzeug nichtmehr verkehrstauglich abgestützt ist. Daher sind insbesondere kleine Stützräder keine Fahrwerkskomponenten im Sinne der Erfindung. Insbesondere ist es vorgesehen, dass die Sekundäreinrichtung mittelbar oder unmittelbar an einer Unterseite der Fahrzeugkomponente angebunden ist, sodass ein möglichst geringer Abstand zum Boden gewährleistet werden kann. Dabei dient der Führungslenker der schwenkbaren Lagerung der Achse und ist dabei über den Haltebock um eine Lenkerachse schwenkbar an dem Unterboden des Anhängers angebunden. Vorteilhafterweise ist der Führungslenker ein Längslenker, wobei ein Längslenker bei der Radaufhängung von Kraftfahrzeugen in Fahrtrichtung angeordnete Lenker bezeichnet. Sie führen insbesondere Starrachsen und bei Einzelradaufhängungen den Radträger annähernd vertikal und stützen Längskräfte und Bremsreaktionsmomente am Fahrzeugkörper ab, insbesondere über einen Lagerbock. Ferner dient der Querträger der Einbindung eines Fahrwerks und erstreckt sich beispielsweise entlang einer Querrichtung des Anhängers, vorzugsweise zwischen zwei Halteböcken. In einer weiteren vorteilhaften Ausführungsform wird die Sekundäreinrichtung im Bereich der Stützwinden an die Stützwinden selbst oder die diese abstützende Struktur, wie zum Beispiel Querverstrebungen, angebunden. Aber auch ein Palettenkasten oder das Gehäuse eines am Nutzfahrzeug verbauten Energiespeichers können als vorteilhafte Befestigungspunkte im Sinne dieser Erfindung in Frage kommen.

Zweckmäßigerweise weist der Anhänger eine Achse auf, wobei die Achse mittels eines elektrischen Motors angetrieben ist, wobei vorteilhafterweise die Achse eine Fahrzeugkomponente ist, an welcher die Sekundäreinrichtung angeordnet ist. Durch das Vorsehen einer elektrisch angetriebenen Achse kann in einfacher Weise der Kraftstoffverbrauch eines Zuggespanns, in welchem der Anhänger vorhanden ist, reduziert werden. Daher kann durch die elektrisch angetriebene Achse die Umweltbelastung durch das Gespann reduziert werden. Der elektrische Motor kann dabei insbesondere zwischen den Rädern der Achse angeordnet sein. In anderen Worten kann der Motor gerade kein Nabenmotor sein. Alternativ oder zusätzlich bevorzugt werden alle Räder der Achse, welche den elektrischen Motor aufweist, durch diesen einen Motor angetrieben. Hierdurch kann die Anzahl von Motoren reduziert werden, denn jede Achse weist somit lediglich einen Motor auf, sodass ein kostengünstiger Anhänger resultiert.

Vorzugsweise ist die Sekundäreinrichtung schwenkbar an die Fahrzeugkomponente angeordnet bzw. angelenkt, insbesondere um eine parallel zur Querrichtung des Anhängers verlaufenden Richtung schwenkbar angeordnet bzw. angelenkt. Dadurch ist in vorteilhafter Weise möglich, im Falle eventueller Neigungen des Anhängers, zum Beispiel bei einem schnellen Beladen oder bei einer ungleichmäßigen Beladung des Ladevolumens, trotzdem dafür zu sorgen, dass die Sekundäreinrichtung parallel zur Primäreinrichtung ausgerichtet ist und ihre Ladestellung, in der die Sekundäreinrichtung parallel zur Primäreinrichtung ausgerichtete ist, einnimmt. Entsprechend kann auch trotzt einer geneigten Stellung des Unterbodens und/oder der Fahrzeugkomponente für eine optimale Übertragung beim induktiven bzw. mechanischen Koppeln zwischen Primäreinrichtung und Sekundäreinrichtung gesorgt werden. Hierzu ist die Sekundäreinrichtung vorzugsweise über ein Kopplungselement an die Fahrzeugkomponente angebunden, wobei das Kopplungselement für die schwenkbare Lagerung bezüglich der Fahrzeugkomponente sorgt.

Zweckmäßigerweise erfolgt eine Ausrichtung in eine Ladestellung schwerkraftbedingt und/oder gesteuert. Insbesondere erfolgt die gesteuerte Ausrichtung in die Ladestellung bzw. Ladestellung manuell, beispielsweise über einen Hebelmechanismus, oder über einen Antrieb, beispielsweise über einen Elektromotor. Durch den gesteuerten Mechanismus kann sichergestellt werden, dass die Sekundäreinrichtung die Ladestellung zu einem gewünschten Zeitpunkt einnimmt, beispielsweise wenn ein Ladevorgang vorgesehen ist. Im Falle einer schwerkraftbedingten Rückführung der Sekundäreinrichtung in die Ladestellung ist die Sekundäreinrichtung beispielsweise derart gleitfähig gelagert, dass durch die Einwirkung der Schwerkraft auf die Sekundäreinrichtung diese in die Ladestellung verschwenkt wird, in der die Sekundäreinrichtung parallel zur Primäreinrichtung verläuft und sich so anordnet, dass der Abstand zur Fahrbahn minimal wird. Weiterhin ist es vorstellbar, dass die Sekundäreinrichtung mittelbar über Wälzkörper an die Schwenkachse angebunden ist.

Insbesondere ist die Sekundäreinrichtung derart angeordnet bzw. angelenkt, dass die Ausrichtung in die Ladestellung über eine gedämpfte Schwingung erfolgt. Dadurch lässt sich in vorteilhafter Weise ein Überschwingen, beispielsweise bei der schwerkraftbedingten Rückkehr der Sekundäreinrichtung nach einer Auslenkung, verhindern. Beispielsweise wird eine derartige gedämpfte Schwingung durch Federelemente und/oder durch eine entsprechend eingestellte Reibung mit der der Schwenkachse realisiert.

Vorzugsweise ist ein Kopplungselement, beispielsweise ein Schalenelement und/oder ein Schwenkarm, an einer Schwenkachse, beispielsweise einer Querstrebe und/oder einer Achse des Anhängers, angeordnet bzw. angelenkt, wobei bevorzugt eine elektrische Leitung am oder innerhalb des Kopplungselements geführt wird. Dadurch lässt sich in vorteilhafter Weise die elektrische Leitung über das Kopplungselement direkt zum Energiespeicher bzw. zum elektrischen Verbraucher führen. Ferner ist es vorstellbar, dass die Achse mit Motoren in der Nabe oder in der Nähe der Achse ausgestattet ist, sodass dann eine Verbindung mit den Leitungen hergestellt werden kann, die ohnehin benötigt werden, um die notwendige Energie zum Antreiben eines Energiespeichers zum Elektromotors oder beim Rekuperieren vom Elektrometer zurück zum Energiespeicher zu übertragen.

Vorzugsweise ist die Sekundäreinrichtung an/in einem Träger angeordnet oder eingelassen bzw. zumindest teilweise, vorzugsweise vollständig, innerhalb des Trägers angeordnet. Dadurch lässt sich die Sekundäreinrichtung in vorteilhafter Weise geschützt in dem Träger anordnen, der zudem ermöglicht, dass die Dimensionierung des Trägers so angepasst werden kann, dass sie beispielsweise optimiert ist für die schwerkraftbedingte Rückkehr der Sekundäreinrichtung bzw. des Trägers. Beispielsweise handelt es sich bei dem Träger um einen plattenförmigen Grundkörper, in dem die Sekundäreinrichtung angeordnet ist. Dabei ist die Sekundäreinrichtung beispielsweise an der der Fahrbahn zugewandten Seite und/oder an der der Fahrbahn abgewandten Seite am Träger angeordnet.

Zweckmäßigerweise ist ein Mittel zur Begrenzung einer Schwenkbewegung des Trägers und/oder der Sekundäreinrichtung vorgesehen. Dadurch lässt sich in vorteilhafter Weise vermeiden, dass die schwenkbar gelagerte Sekundäreinrichtung versehentlich am Fahrzeugrahmen bzw. Unterboden des Anhängers oder am Boden bzw. der Fahrbahn anschlägt. Um eine besonders sichere Begrenzung herbeizuführen, ist die Begrenzung insbesondere formschlüssig ausgebildet. Beispielsweise ist es vorstellbar, dass ein solches Mittel zur Begrenzung der Schwenkbewegung als Anschlag an der Schwenkachse, beispielsweise an der Achse und/oder der Querstrebe, vorzugsweise als radial abstehender Vorsprung, ausgebildet ist.

Alternativ ist es vorstellbar, dass durch Bänder, insbesondere elastische oder unelastische Bänder, die Schwenkbewegung des Trägers bzw. der Sekundärquelle begrenzt wird.

Vorzugsweise ist es vorgesehen, dass die Sekundäreinrichtung und/oder der Träger sich in Längsrichtung des Anhängers zwischen 10 cm und 100 cm, vorzugsweise 30 cm und 90 cm und besonders bevorzugt zwischen 60 und 80 cm erstreckt und/oder ein Verhältnis einer ersten Länge der Sekundäreinrichtung und/oder des Trägers in Längsrichtung zu einer zweiten Länge des Führungslenker ein Wert zwischen 0,3 und 0,9 bevorzugt zwischen 0,4 und 0,8 und besonders bevorzugt zwischen 0,5 und 0,75 annimmt. Es hat sich in überraschender Weise bzw. in vorteilhafter Weise herausgestellt, dass mit derart dimensionierten Trägern bzw. Sekundäreinrichtungen, Drehmomente bereitgestellt werden, die sich vorteilhaft auswirken auf die Rückkehr des Trägers bzw. der Sekundäreinrichtung, wenn der Träger bzw. die Sekundäreinrichtung aus der Ladestellung herausverschwenkt wird. Gleichzeitig ist der Träger bzw. die Sekundäreinrichtung derart dimensioniert, dass er bzw. sie sich einfach verschwenken lassen, ohne dass ein Anschlagen am Unterboden oder Boden zu befürchten ist.

Vorzugsweise ist die Sekundäreinrichtung gefedert bzw. rückstellfähig an der Fahrzeugkomponente gelagert. Dies erweist sich insbesondere für diejenigen Fahrzeugkomponenten als Vorteil, die grundsätzlich nicht federnd am Unterboden des Anhängers gelagert sind, wie zum Beispiel die Fahrzeugkomponenten in Form des Querträgers und/oder des Haltebocks. Dabei dient die gefederte Lagerung insbesondere einer schwingenden Bewegung in vertikaler Richtung, d. h. einer Auf- und Ab-Bewegung der Sekundäreinrichtung. Dadurch lässt sich in vorteilhafter Weise die Sekundäreinrichtung gegenüber Erschütterungen bei Bewegungen des Anhängers schützen.

Vorzugsweise ist vorgesehen, dass die Sekundäreinrichtung höhenverstellbar ist. Dadurch lässt sich in vorteilhafter Weise der Abstand zwischen der Sekundäreinrichtung und der Primäreinrichtung bedarfsweise weiter verringern, sodass eine möglichst effiziente induktive Übertragung zwischen Primäreinrichtung und Sekundäreinrichtung beim Koppeln möglich ist. Beispielsweise ist diese Höhenverstellung manuell und/oder motorbetrieben möglich. Beispielsweise handelt es sich um ein Hubelement, mit dem die Höhenverstellung vorgenommen werden kann.

Ein weiterer Aspekt der vorliegenden Erfindung ist ein Nutzfahrzeug, insbesondere ein Sattelzug, mit einem elektrischen Energiespeicher und/oder einem elektrischen Verbraucher, wobei das Nutzfahrzeug eine Sekundäreinrichtung zum induktiven und/oder mechanischen Koppeln mit einer nutzfahrzeugexternen Primäreinrichtung für ein Übertragen von Energie, insbesondere induktives Übertragen von Energie, von der Primäreinrichtung zu der Sekundäreinrichtung umfasst, wobei die Sekundäreinrichtung an einer von einem Unterboden des Nutzfahrzeugs beabstandeten und/oder abstehenden Fahrzeugkomponente angeordnet ist. Alle für den Anhänger beschriebenen Eigenschaften und Vorteile lassen sich analog übertragen auf das Nutzfahrzeug und andersrum. Insbesondere betrifft das Nutzfahrzeug auch die Sattelzugmaschine, mit der der Sattelanhänger gezogen wird. Auch hier ergibt sich der Vorteil, wonach die üblicherweise großen Abstände zwischen Fahrbahn und Unterboden des Nutzfahrzeugs mittels der Fahrzeugkomponente in vorteilhafter Weise überbrückt werden können, insbesondere ohne zusätzliches Bauteil.

Ein weiterer Aspekt der vorliegenden Erfindung betrifft ein Verfahren zum induktiven Koppeln einer Sekundäreinrichtung eines Anhängers an eine anhängerexterne Primäreinrichtung, wobei die Sekundäreinrichtung an einer von einem Unterboden des Anhängers beabstandeten und/oder abstehenden Fahrzeugkomponente angeordnet ist. Alle für das den Anhänger beschriebenen Eigenschaften und Vorteile lassen sich analog übertragen auf das Verfahren. Insbesondere lässt sich das Verfahren ebenso auf das Nutzfahrzeug übertragen.

Weitere Vorteile und Eigenschaften ergeben sich aus der nachfolgenden Beschreibung bevorzugter Ausführungsformen des erfindungsgemäßen Gegenstands mit Bezug auf die beigefügten Figuren. Es zeigt:
- **Fig. 1**: zeigt schematisch einen Anhänger gemäß einer ersten beispiel-haften Ausführungsform der vorliegenden Erfindung
- **Fig. 2a und 2b**: zeigen schematisch Anhänger gemäß einer zweiten und dritten beispielhaften Ausführungsform der vorliegenden Erfindung
- **Fig. 3**: zeigt eine Achse eines Anhängers gemäß einer vierten beispiel-haften Ausführungsform der vorliegenden Erfindung
- **Fig. 4**: zeigt eine Achse eines Anhängers gemäß einer fünften beispiel-haften Ausführungsform der vorliegenden Erfindung und
- **Fig. 5**: zeigt eine Achse eines Anhängers gemäß einer sechsten beispielhaften Ausführungsform der vorliegenden Erfindung.

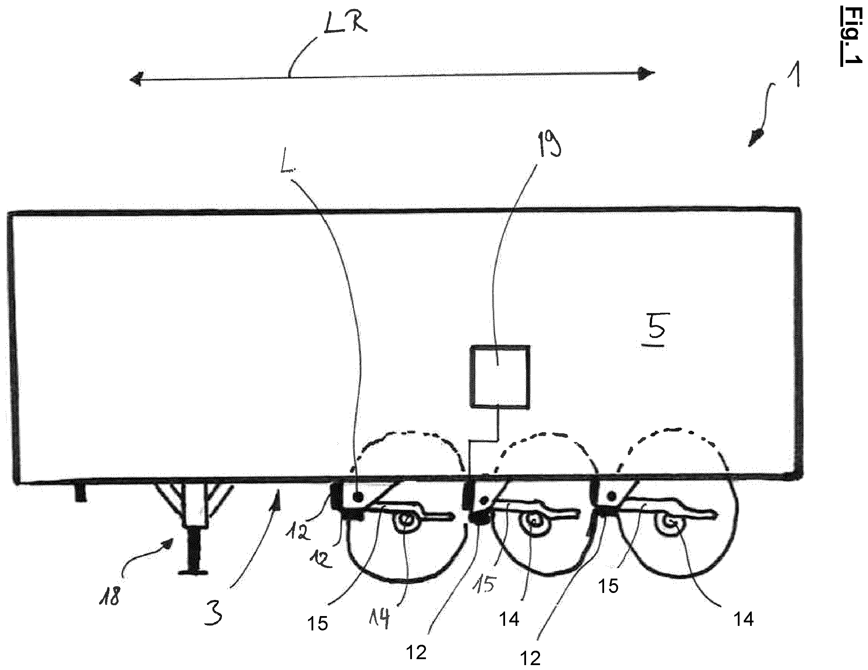

In **Figur 1** ist schematisch einen Anhänger 1 gemäß einer ersten beispielhaften Ausführungsform der vorliegenden Erfindung dargestellt. Insbesondere handelt es sich um einen Sattelanhänger, der in Längsrichtung LR gesehen im vorderen Bereich über eine Schnittstelle, beispielsweise in Form eines Königszapfens, zum Anbinden an ein Zugfahrzeug verfügt. Dabei umfasst der Anhänger 1 ein Ladevolumen 5, in dem Transportgüter für den Transport gelagert werden. In dem dargestellten Ausführungsbeispiel umfasst der Anhänger 1 drei Achsen 14, die in Längsrichtung LR gesehen in einem hinteren Bereich des Anhängers 1 angeordnet sind. Dabei sind die Achsen 14 über ein System aus Führungslenker 15 und Haltebock 13 an einem Unterboden 3 des Anhängers 1 angebunden. Solange der Sattelanhänger nicht an eine Zugmaschine angebunden ist wird der Sattelanhänger über ein Stützelement 18 horizontal ausgerichtet bzw. gehalten.

Ferner ist es vorgesehen, dass der Anhänger 1 einen elektrischen Energiespeicher 19 und/oder ein elektrischen Verbraucher umfasst. Beispielsweise ist der elektrische Verbraucher eine Elektromaschine und/oder eine Lichtanlage, mit der verkehrsübliche Signale ausgegeben werden. Um den elektrischen Energiespeicher 19 und/oder den elektrischen Verbraucher bei Bedarf aufzuladen ist es vorgesehen, dass der Anhänger 1 eine Sekundäreinrichtung 12 aufweist. Mit einer solchen Sekundäreinrichtung 12 ist es möglich, durch ein induktives Koppeln mit einer anhängerexternen Primärstufenspule 11 ein induktives Übertragen von Energie von der Primäreinrichtung 11 zu den Sekundäreinrichtung 12 zu ermöglichen. Dabei ist es insbesondere vorgesehen, dass die Sekundäreinrichtung 12 am Unterboden 3, der einer Fahrbahn bzw. einem Boden 7 zugewandt ist, angeordnet ist. Um einen Abstand beim Aufladen bzw. induktiven Koppeln der Primäreinrichtung 11 und der Sekundäreinrichtung 12 möglichst gering zu halten, ist die Sekundäreinrichtung 12 an einer Fahrzeugkomponente angeordnet, die vom Unterboden 3 des Anhängers 1 in Richtung des Bodens absteht. In dem in Figur 1 dargestellten Ausführungsbeispiel handelt es sich bei der in Rede stehenden Fahrzeugkomponente um einen Haltebock 13, an dem über eine Lenkerachse L ein Führungslenker 15 angebunden ist, insbesondere schwenkbar angebunden ist. Dabei ist es vorstellbar, dass die Sekundäreinrichtung 12 an einer im Wesentlichen vertikal verlaufenden Frontseite des Haltebocks 13 angeordnet ist und/oder an einer parallel zur Fahrzeugbahn bzw. dem Boden 7 verlaufenen Unterseite des Haltebocks 13. Insbesondere ist es vorgesehen, dass es sich bei der Fahrzeugkomponente um ein solches Bauteil handelt, das bereits primär einem anderen Zweck als der Anbindung der Sekundäreinrichtung 12 dient, sodass auf zusätzliche Bauteile für die Anbindung der Sekundäreinrichtung 12 verzichtet werden kann und gleichzeitig ein möglichst geringer Abstand zwischen der Sekundäreinrichtung 12 und dem Boden 7 bzw. der Primäreinrichtung 11 gewährleistet werden kann.

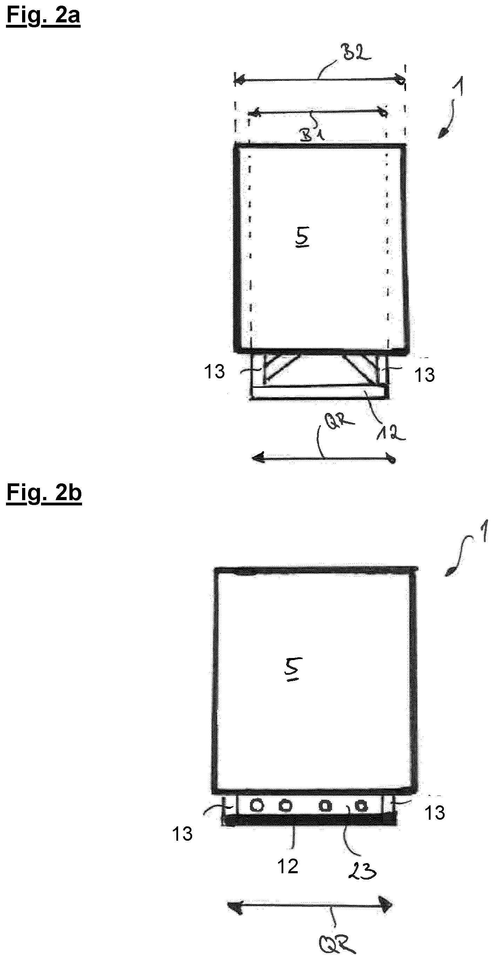

In den **Figuren 2a und 2b** sind schematisch Anhänger 1 gemäß einer zweiten und einer dritten bevorzugten Ausführungsform der vorliegenden Erfindung dargestellt. Insbesondere handelt sich bei der Darstellung um eine Ansicht auf den Anhänger 1 in Richtung der Längsrichtung LR, d. h. es handelt sich um eine Schnittansicht in einer Ebene senkrecht zur Längsrichtung LR. In Figur 2a ist dabei die Sekundäreinrichtung 12 an zwei gegenüberliegenden Halteböcken 13 angeordnet, insbesondere an deren Unterseiten. Dabei erstreckt sich die Sekundäreinrichtung 12 in einer senkrecht zur Längsrichtung LR verlaufenen Querrichtung QR über eine erste Breite B1. Insbesondere ist es vorgesehen, dass ein Verhältnis der ersten Breite B1 zu einer zweiten Breite B2, die sich über die gesamte Breite des gesamten Anhängers 1 erstreckt, einen Wert zwischen 0,7 und 1, bevorzugt zwischen 0,8 und 0,95 und besonders bevorzugt zwischen 0,85 und 0,9 annimmt. Entsprechend erstreckt sich die Sekundäreinrichtung 12 im Wesentlichen über die gesamte Quererstreckung des Anhängers 1, um eine entsprechend möglichst große Fläche bereitzustellen, die dem induktiven Koppeln der Sekundäreinrichtung 12 mit der Primäreinrichtung 11 dient.

In der Figur 2b ist die Sekundäreinrichtung 12 an einem Querträger 23 angebunden insbesondere ist die Sekundäreinrichtung 12 an einer Unterseite des Querträgers 23 angebunden, die dem Boden 7 zugewandt ist. Ein derartiger Querträger 23 steht vorzugsweise senkrecht vom Unterboden 3 ab und dient der Einbindung eines Fahrwerks des Anhängers 1.

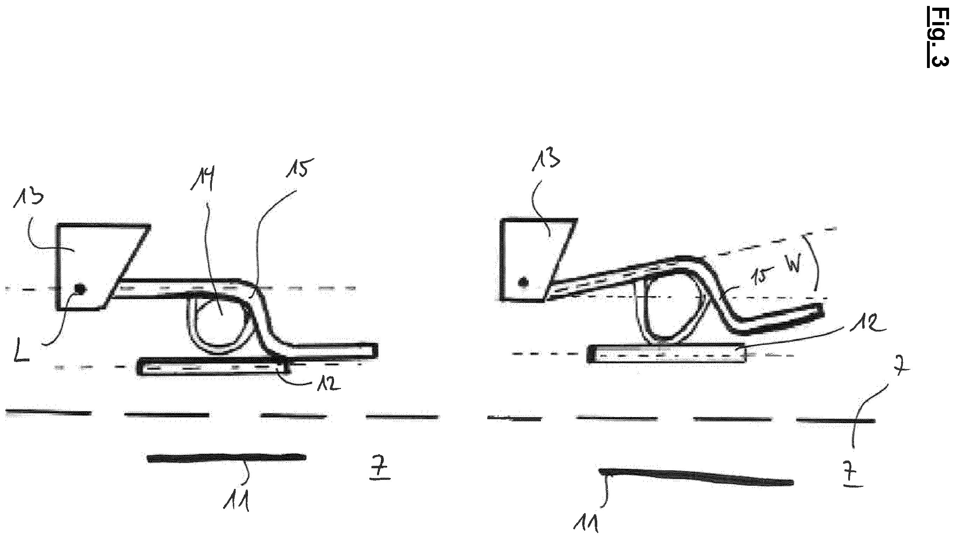

In **Figur 3** ist schematisch eine Achse 14 für einen Anhänger 1 gemäß einer vierten beispielhaften Ausführungsform der vorliegenden Erfindung dargestellt. In dem dargestellten Ausführungsbeispiel ist die Sekundäreinrichtung 12 an den Führungslenker 15 bzw. an die Achse 14, insbesondere in Form eines Achsrohrs, angebunden. Insbesondere zeigt die Figur 3 die Ausrichtung des Führungslenkers 15 in einem beladenen Zustand (rechts) und in einem entladenen Zustand (links). Durch das Beladen des Ladevolumens 5 des Anhängers 1 kann es zu einem Absinken des Ladevolumens 5 kommen. Dabei wird der Führungslenker 15, der mittels einer Feder, insbesondere einer Luftfeder, und über den Haltebock 13 an den Unterboden 3 des Anhängers 1 angebunden ist, verschwenkt, so dass sich ein Neigungswinkel W für den Führungslenker 15 einstellt, der insbesondere abweicht von einer parallelen Ausrichtung bezogen auf die Fahrbahn bzw. den Boden 7. In dem in Figur 3 dargestellten Ausführungsbeispiel ist es dabei vorgesehen, dass die Sekundäreinrichtung 12 derart an der Achse 14 und/oder dem Führungslenker 15 gelagert ist, dass die Sekundäreinrichtung 12 unabhängig von dem Neigungswinkels W des Führungslenkers 15 parallel zum Boden 7 bzw. zur Primäreinrichtung 11 ausgerichtet ist. In einer solchen Ladestellung, d. h. in einer parallelen Ausrichtung der Sekundäreinrichtung 12 zu der Primäreinrichtung 11, lässt sich ein möglichst effektives und wirkungsvoll induktives Koppeln für die Energieübertragung gewährleisten.

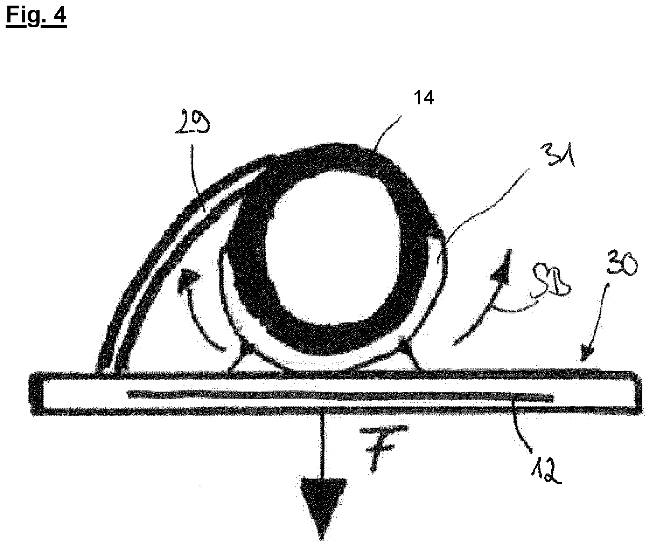

**Figur 4** zeigt eine Achse 14 für einen Anhänger 1 gemäß einer fünften beispielhaften Ausführungsform der vorliegenden Erfindung. Dabei ist die Sekundäreinrichtung 12 in einem Träger 30 eingelassen und insbesondere über ein Schalenelement 31 an das Achsrohr bzw. die Achse 14 schwenkbar angelagert. Insbesondere gestattet die Anlenkung des Trägers 30 mit der Sekundäreinrichtung 12 über das Schalenelement 31 eine Schwenkbewegung SB entlang des Umfangs des Achsrohr bzw. der Achse 14, wobei das Schalenelement 31 in der dargestellten Ausführungsform beispielhaft über zwei Streben mit dem Träger 30 verbunden ist und sich vorzugsweise über mehr als die Hälfte des Umfangs des Achsrohr bzw. der Achse 14 in deren Umlaufrichtung erstreckt. Vorzugsweise bilden die Achse 14 und das Schalenelement 31 ein Lager, beispielsweise ein Gleitlager. Insbesondere ist der Träger 30 mit der Sekundäreinrichtung 12 derart an der Achse 14 gelagert, dass eine Schwenkbewegung SB schwerkraftbedingt erfolgt. Dadurch ist kein weiterer Mechanismus erforderlich, mit dem der Träger 30 bzw. Sekundäreinrichtung 12 in die Ladestellung überführt werden müsste. Alternativ ist es vorstellbar, dass der Träger 30 mit der Sekundäreinrichtung 12 über einen manuellen oder motorisierten Mechanismus in die Ladestellung verschwenkt wird. Ferner ist ein Begrenzungselement 29 vorgesehen, mit dem ein Verdrehen des Trägers 30 bei dessen Schwenkbewegung SB begrenzt ist, um zu verhindern, dass der Träger 30 bzw. die Sekundäreinrichtung 12 in eine ungewünschte Orientierung bzw. Ausrichtung verschwenkt wird.

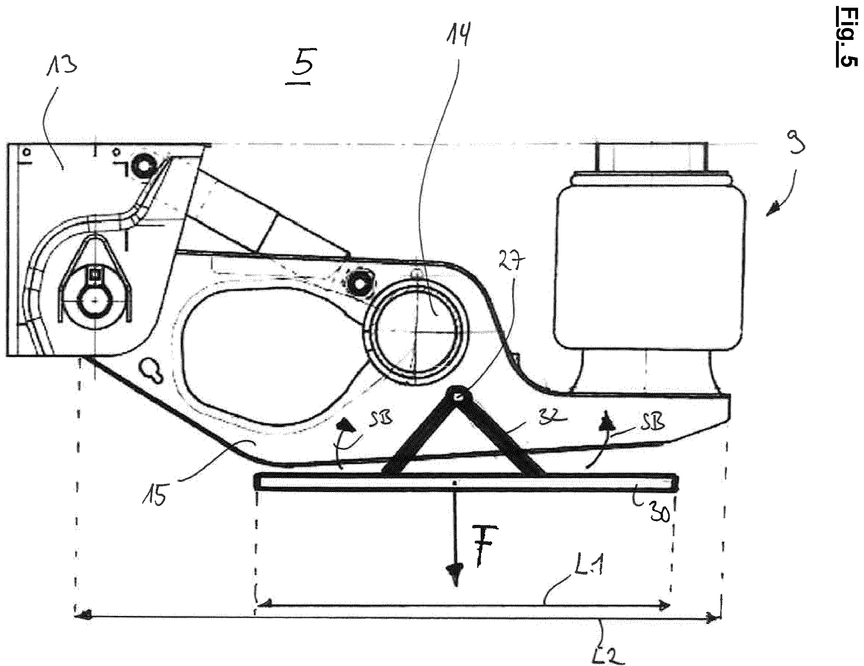

In **Figur 5** ist ein Führungslenker 15 für ein Anhänger 1 gemäß einer sechsten beispielhaften Ausführungsform der vorliegenden Erfindung dargestellt. In der in Figur 5 dargestellten Ausführungsform ist der am Haltebock 13 über die Lenkerachse L schwenkbar angebundene Führungslenker 15 an seinem dem Haltebock 13 gegenüberliegenden Ende über eine Luftfeder 9 an den Unterboden 3 des Anhängers 1 angebunden. Dadurch ist eine federnde Lagerung des Führungslenkers 15 möglich. Im Gegensatz zu dem Ausführungsbeispiel aus Figur 4 ist der Träger 30 am Führungslenker 15 angebunden, insbesondere an eine Querstrebe 27 des Führungslenkers 15, die senkrecht zur Längsrichtung LR des Anhängers 1 verläuft. Im Gegensatz zum Querträger 23 ist die Querstrebe 27 nicht unmittelbar an den Unterboden 3 des Anhängers 1 angebunden, sondern ist Teil des Führungslenkers 15, welcher in Figur 5 und auch in der Figur 1 und der Figur 3 ein Längslenker ist. Ferner ist es dabei vorgesehen, dass ein Kopplungselement, beispielsweise in Form von Schwenkarmen 32, vorgesehen ist, das den Träger 30 mit der Querstreben 27 verbindet, insbesondere so verbindet, dass eine schwenkbare Lagerung um die Querstrebe 27 möglich ist. Es ist auch vorstellbar, dass der Träger 30 schaukelförmig an dem Führungslenker 15 bzw. an der Querstrebe 27 angelenkt ist. Ferner ist es dabei vorgesehen, dass in Längsrichtung LR gesehen der Träger 30 und/oder die Sekundäreinrichtung 12 eine erste Länge L1 aufweist und der Führungslenker 15 eine in Längsrichtung LR gemessene zweite Länge L2 aufweist. Dabei ist es bevorzugt vorgesehen, dass ein Verhältnis der ersten Länge L1 zur der zweiten Länge L2 ein Wert zwischen 0,3 und 0,9 bevorzugt zwischen 0,4 0,8 und besonders bevorzugt zwischen 0,5 und 0,75 annimmt. Dadurch ist es in vorteilhafter Weise möglich, durch die vergleichsweise große Ausdehnung des Trägers 30 bzw. der Sekundäreinrichtung 12 in Längsrichtung LR gesehen ein Drehmoment bereitzustellen, das die Rückkehr des Trägers 30 in die Ladestellung unterstützt, wenn der Träger 30 gegenüber der Ladestellung ausgelenkt wird, zum Beispiel wegen einer sich plötzlich ändernden Ladesituation im Ladevolumen 5 des Anhängers 1.

### Bezugszeichenliste:

- 1: Anhänger
- 3: Unterboden
- 5: Ladevolumen
- 7: Boden
- 9: Luftfeder
- 11: Primäreinrichtung
- 12: Sekundäreinrichtung
- 13: Haltebock
- 14: Achse
- 15: Führungslenker
- 18: Stützelement
- 19: elektrische Energiespeicher
- 23: Querträger
- 27: Querstrebe
- 29: Begrenzungselement
- 30: Träger
- 31: Schalenelement
- 32: Schwenkarme
- SB: Schwenkbewegung
- F: Schwerkkraft
- L: Lenkerachse
- W: Neigungswinkel
- QR: Querrichtung
- LR: Längsrichtung
- L1: erste Länge
- L2: zweite Länge

## Patentansprüche

1. Anhänger (1), insbesondere Sattelanhänger, mit einem elektrischen Energiespeicher (19) und/oder einem elektrischen Verbraucher,
wobei der Anhänger (1) eine Sekundäreinrichtung (12) zum induktiven und/oder mechanischen Koppeln mit einer anhängerexternen Primäreinrichtung (11), vorzugsweise eine Primärspule, für ein Übertragen von Energie, vorzugsweise ein induktives Übertragen, von der Primäreinrichtung (11) zu der Sekundäreinrichtung (12), vorzugsweise eine Sekundärspule, umfasst,
wobei die Sekundäreinrichtung (12) an einer von einem Unterboden (3) des Anhängers (1) abstehenden und/oder beabstandeten Fahrzeugkomponente angeordnet ist.

2. Anhänger (1) gemäß Anspruch 1, wobei die Fahrzeugkomponente eine Fahrwerkskomponente des Anhängers (1) ist.

3. Anhänger (1) gemäß einem der vorhergehenden Ansprüche, wobei die Fahrzeugkomponente eine Achse (14), insbesondere ein Achsrohr bzw. ein Achsstummel, und/oder ein Führungslenker (15) und/oder ein Haltebock (13) und/oder ein Querträger (23) und/ oder ein Palettenkasten und/oder eine Stützwinde ist.

4. Anhänger (1) gemäß Anspruch 3, wobei der Führungslenker (15) ein Längslenker ist.

5. Anhänger (1) gemäß einem der vorhergehenden Ansprüche,
wobei der Anhänger (1) eine Achse (14) aufweist,
wobei die Achse (14) mittels eines elektrischen Motors angetrieben ist,
wobei vorteilhafterweise die Achse eine Fahrzeugkomponente ist, an welcher die Sekundäreinrichtung (12) angeordnet ist.

6. Anhänger (1) gemäß einem der vorhergehenden Ansprüche, wobei die Sekundäreinrichtung (12) schwenkbar an der Fahrzeugkomponente angeordnet oder angelenkt ist, insbesondere um eine parallel zur Querrichtung (QR) des Anhängers (1) verlaufende Richtung schwenkbar angeordnet oder angelenkt ist.

7. Anhänger (1) gemäß Anspruch 6, wobei die Sekundäreinrichtung (12) derart angeordnet oder angelenkt ist, dass eine Ausrichtung in eine Ladestellung schwerkraftbedingt und/oder gesteuert erfolgt.

8. Anhänger (1) gemäß Anspruch 7, wobei die Sekundäreinrichtung (12) derart angeordnet oder angelenkt ist, dass die Ausrichtung in die Ladestellung über eine gedämpfte Schwingung erfolgt.

9. Anhänger (1) gemäß einem der Ansprüche 6 bis 8, wobei die Sekundäreinrichtung (12) in einem Träger (30) eingelassen bzw. zumindest teilweise, vorzugsweise vollständig, innerhalb des Trägers (30) angeordnet ist.

10. Anhänger (1) gemäß einem der vorhergehenden Ansprüche, wobei ein Mittel zur Begrenzung einer Schwenkbewegung des Trägers und/oder der Sekundäreinrichtung (12) vorgesehen ist.

11. Anhänger (1) gemäß Anspruch 10,
wobei die Begrenzung der Schwenkbewegung formschlüssig erfolgt.

12. Anhänger (1) gemäß einem der vorhergehenden Ansprüche, wobei die Sekundäreinrichtung (12) gefedert an der Fahrzeugkomponente gelagert ist.

13. Nutzfahrzeug, insbesondere Sattelzug, mit einem elektrischen Energiespeicher (19) und/oder einem elektrischen Verbraucher, wobei das Nutzfahrzeug eine Sekundäreinrichtung (12) zum induktiven und/oder mechanisches Koppeln mit einer nutzfahrzeugexternen Primäreinrichtung (11) für ein Übertragen von Energie, insbesondere für ein induktives Übertragen von Energie, von der Primäreinrichtung (11) zu der Sekundäreinrichtung (12) umfasst, wobei die Sekundäreinrichtung (12) an einer von einem Unterboden (3) des Nutzfahrzeug abstehenden und/oder beabstandeten Fahrzeugkomponente angeordnet ist.

14. Verfahren zum induktiven Koppeln einer Sekundäreinrichtung (12) eines Anhängers (1) an eine anhängerexterne Primäreinrichtung (11), wobei die Sekundäreinrichtung (12) an einer von einem Unterboden (3) des Anhängers (1) abstehenden und/oder beabstandeten Fahrzeugkomponente angeordnet ist.
